# FASCICULE DE BREVET EUROPEEN

(11) **EP 1 505 870 B1**
(45) Date de publication et mention de la délivrance du brevet: **19.10.2005**
(21) Numéro de dépôt: 03740676.6
(22) Date de dépôt: 28.04.2003
(51) Int. Cl.: A01K 45/00

(54) **PROCEDE ET DISPOSITIF D'INJECTION D'AU MOINS UN PRODUIT DANS UN OEUF POUR TRAITER L'EMBRYON**
VERFAHREN UND VORRICHTUNG ZUM INJEKTIEREN VON EIERN MIT MINDESTENS EINEM MITTEL ZUR BEHANDLUNG EINES EMBRYOS
METHOD AND DEVICE FOR INJECTING AT LEAST ONE PRODUCT IN AN EGG FOR TREATING THE EMBRYO

(30) Priorité: 30.04.2002 FR 0205409
(43) Date de publication de la demande: 16.02.2005
(73) Titulaire: Breuil SA Etudes Enginering Constructions et Reparations de Materiel, 29404 Landivisiau Cedex (FR)
(72) Inventeur: BREUIL, Jean-Pierre, F-29670 Locquenole (FR); BREUIL, Vivienne, F-29670 Locquenole (FR)
(74) Mandataire: Chambon, Gérard
(86) Numéro de dépôt international: PCT/FR2003/001324
(87) Numéro de publication internationale: WO 2003/092368

(56) Documents cités:
- WO-A-00/40079
- US-A- 4 469 047
- US-A- 5 698 193
- US-B1- 6 240 877

## Description

L'invention concerne un procédé et un dispositif d'injection d'au moins un produit dans un oeuf, en particulier d'oiseau, pour traiter l'embryon.

Il est connu de vacciner les poussins contre diverses maladies et/ou de leur injecter diverses substances ou produits dans un but qualitatif ou quantitatif.

Le traitement des embryons dans l'oeuf par injection est un progrès important, notamment pour l'industrie du poulet.

En effet, ce type d'injection évite notamment la manipulation des poussins et réduit de manière importante le travail qui consistait à procéder dans les couvoirs à une injection sous-cutanée sur des poussins, généralement à un jour.

En outre, on comprend que l'injection dans l'oeuf permet d'obtenir une immunité plus tôt que celle obtenue avec une vaccination après l'éclosion, ce qui augmente bien sûr la protection du poussin.

La vaccination dans l'oeuf est notamment utilisée contre la maladie de Marek mais aussi expérimentalement contre les maladies telles que la maladie de Gumboro (IBD), la bronchite infectieuse, la maladie de Newcastle, ...

Jusqu'à présent, ces injections étaient réalisées au moyen de dispositifs d'injection munis d'au moins une aiguille destinée à traverser la coquille et les différentes membranes de l'oeuf afin d'injecter un ou plusieurs produits dans le liquide amniotique et/ou voire même dans l'embryon lui-même. Voir p.e. les documents US-A-5 698 193 et WO-A-0 040 079.

Toutefois, ces dispositifs présentent généralement, outre les risques de blesser l'embryon, le risque de provoquer un traumatisme à ce dernier et dans tous les cas, ces dispositifs ont des risques importants de contamination du fait du contact de l'aiguille avec le liquide amniotique.

C'est pourquoi l'inventeur a imaginé un procédé et un dispositif qui, notamment, limitent les risques de contamination et de traumatisme de l'embryon.

Le procédé selon l'invention est notamment remarquable en ce qu'il consiste à percer la coquille et la membrane coquillière externe par le gros côté de l'oeuf au moyen d'un petit tube et d'injecter par ledit tube le produit dans la chambre à air de l'oeuf, sous une pression suffisante pour que ledit produit atteigne le liquide amniotique après avoir traversé par pression la membrane coquillière interne.

On comprend bien que selon l'invention, l'injection se produit depuis la chambre à air contrairement aux systèmes de l'art connu munis d'une aiguille qui pénètre dans les liquides extra-embryonnaires et parfois dans l'embryon lui-même.

Par exemple, la pression d'injection du produit est comprise entre 5 et 50 bars et plus particulièrement entre 20 et 50 bars.

L'invention concerne aussi un dispositif qui est remarquable en ce qu'il est pourvu d'un tube de perçage et d'injection destiné à percer la coquille et la membrane coquillière externe et à canaliser au moins un produit dans la chambre à air sous une pression suffisante pour que ledit produit atteigne le liquide amniotique après avoir traversé par pression la membrane coquillière interne.

Par exemple, le tube de perçage et d'injection est alimenté par un piston qui aspire le produit à injecter provenant d'une canalisation d'alimentation pour remplir une chambre d'injection et qui refoule ensuite ledit produit de ladite chambre dans le tube de perçage et d'injection et avantageusement dans ce cas, entre la canalisation d'alimentation du produit et la chambre d'injection est disposé un clapet anti-retour destiné à laisser passer le produit de ladite canalisation vers la chambre d'injection tandis que ladite chambre d'injection est séparée du tube de perçage et d'injection par un autre clapet anti-retour qui laisse passer le produit de la chambre vers ledit tube.

De préférence, le tube de perçage et d'injection est protégé par une douille qui entoure et protège complètement ledit tube au repos tandis que ladite douille est montée mobile en étant sollicitée dans cette position par un moyen élastique de telle sorte qu'une force exercée sur l'extrémité de la douille entraîne un mouvement de celle-ci qui permet alors au tube de faire saillie de ladite douille .

Avantageusement dans ce cas, la douille est pourvue d'une coupelle de centrage destinée à venir recouvrir partiellement l'oeuf sur lequel elle vient en contact.

Selon un mode de réalisation, le dispositif comporte une canalisation d'alimentation qui communique avec la douille afin de pouvoir injecter un désinfectant destiné à désinfecter au moins la surface externe de la partie pénétrante du tube de perçage et d'injection et/ou la surface de l'oeuf à percer.

En outre, le dispositif peut par exemple être pourvu d'un système de déplacement, notamment de montée-descente de l'ensemble, destiné à positionner le dispositif sur l'oeuf à traiter et à le retirer.

Selon un mode de réalisation, le système de déplacement est relié au dispositif par un accouplement articulé.

Par exemple, le système de déplacement comporte un vérin dont l'extrémité de la tige est reliée au dispositif.

L'invention sera bien comprise à la lecture de la description qui va suivre et qui se réfère aux dessins annexés dans lesquels :
- la figure 1 représente en coupe longitudinale partielle un mode de réalisation d'un dispositif selon l'invention en position relevée,
- la figure 2 correspond à la figure 1 en position d'injection, le dispositif étant au contact d'un oeuf à traiter.

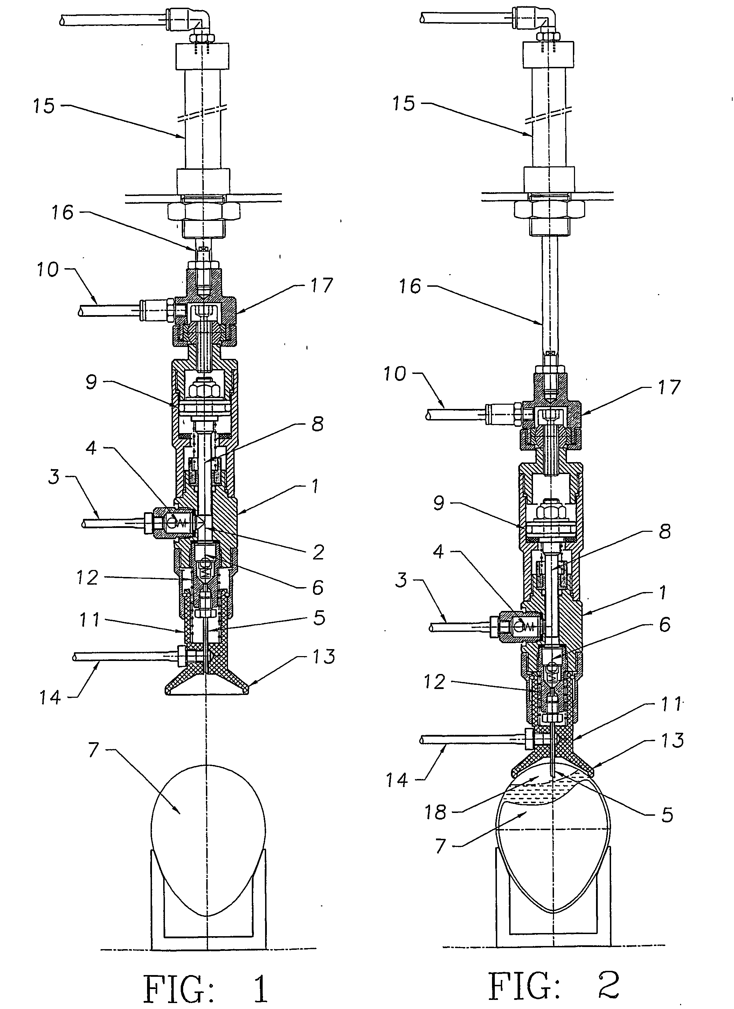

Le dispositif représenté comporte un corps d'injection 1 qui délimite une chambre d'injection 2 (figure 1) à volume variable comme il sera expliqué ci-après.

La chambre 2 communique avec une canalisation 3 d'arrivée du produit à injecter par l'intermédiaire d'un clapet anti-retour 4 destiné à empêcher le produit de revenir de ladite chambre 2 vers ladite canalisation 3.

La chambre 2 communique en outre avec un petit tube de perçage et d'injection 5 (encore appelé trocart) par l'intermédiaire d'un clapet anti-retour 6 destiné à laisser passer le produit contenu dans la chambre d'injection 2 vers ledit tube 5 en interdisant le retour du produit du tube 5 vers ladite chambre 2.

Le tube 5 est fin et présente un diamètre intérieur compris par exemple entre 0,4 et 0,8 mm et un diamètre extérieur compris entre 1 et 1,6 mm.

Dans les fourchettes susmentionnées qui sont données à titre d'exemple, on peut notamment imaginer un tube dont les diamètres intérieur et extérieur sont respectivement d'environ 0,6 et 1,5 mm.

Ce tube est réalisé dans un matériau suffisamment rigide, en inox par exemple, pour percer l'oeuf à traiter, schématisé en 7 sur les dessins, comme il sera expliqué ci-après et il comporte avantageusement une extrémité biseautée afin de poinçonner l'oeuf 7 en limitant les risques d'abîmer la coquille.

La chambre d'injection 2 se remplit et se vide par pression au moyen d'un piston 8 actionné ici par un vérin pneumatique 9 simple ou double effet, alimenté en air par une canalisation 10. Le volume maximal de la chambre 2 peut ainsi être précis et constant et contenir par exemple 0,1 ml à 0,2 ml de produit.

Le vérin 9 pourrait bien entendu être remplacé par tout autre moyen mécanique à déclenchement rapide (type came ou excentrique par exemple).

Comme le montrent bien les dessins, le tube 5 est en outre ici complètement entouré en position initiale ou de repos (figure 1) par une douille 11 de protection qui est montée mobile à l'extrémité du corps d'injection 1 et qui est maintenue dans la position de la figure 1 par un ressort de compression 12.

Cette douille 11 qui masque au repos complètement le tube 5 en protégeant l'utilisateur, comporte en outre ici à son extrémité un embout sous forme d'une coupelle de centrage13, destiné à venir recouvrir partiellement l'oeuf 7 sur lequel elle est destinée à venir en contact (figure 2) comme il sera expliqué ci-après.

Avantageusement, une canalisation 14 d'alimentation communique avec la douille 11 de manière à pouvoir injecter par exemple un désinfectant sur au moins une partie de la surface externe du tube 5.

Comme le montrent encore les dessins, le dispositif est en outre muni d'un système de déplacement, notamment de montée-descente, sous forme ici d'un vérin 15 et plus précisément encore un micro-vérin dont l'extrémité de la tige 16 est reliée à l'ensemble décrit ci-avant par un accouplement articulé 17 permettant de compenser certains petits écarts angulaires et radiaux.

Il est clair bien sûr que le vérin 15 peut être remplacé par tout autre moyen équivalent, mécanique ou électrique.

Suite à la description qui précède, le fonctionnement est simple à comprendre.

Après repérage par mirage d'un oeuf fécondé 7 à injecter, qui est par exemple arrivé au quart final de sa période d'incubation et plus particulièrement encore à son dix-huitième jour, le vérin 15 est actionné et permet la descente du dispositif sur l'oeuf pour passer ainsi de la figure 1 à la figure 2.

Le dispositif d'injection dont la chambre 2 est remplie de produit à injecter (figure 1) vient alors se positionner sensiblement au centre du gros côté de l'oeuf 7 sur lequel vient reposer la coupelle de centrage 13 de la douille 11.

Le dispositif s'adapte aisément au diamètre de l'oeuf et peut fonctionner même si ledit oeuf n'est pas tout à fait disposé à la verticale.

Au contact de ladite coupelle 13 sur l'oeuf, le ressort 12 de la douille 11 de protection se comprime et celle-ci se rétracte dans le corps 1 ou une partie fixée à celui-ci tel un écrou de guidage, en permettant ainsi au tube 5 de faire saillie de ladite douille, de percer la coquille et la membrane coquillière externe de l'oeuf pour ainsi pénétrer d'environ 2 à 5 mm dans la chambre à air 18 de l'oeuf (figure 2).

On comprend que le vérin 15 est aménagé pour présenter une force suffisante pour permettre au tube 5 de percer la coquille de l'oeuf 7 sans dépasser bien sûr la pression de résistance de la coquille.

Suite à ce positionnement, une arrivée d'air par la canalisation 10 permet au piston 8 de vider le produit de la chambre 2 dans le tube 5 en passant par le clapet anti-retour 6 qui s'ouvre, tandis que le clapet anti-retour 4 empêche ledit produit de revenir dans la canalisation 3.

Le produit à injecter sort ainsi sous pression et selon un jet assez fin à l'extrémité du tube 5 dans la chambre à air 18. La pression choisie, comprise par exemple entre 20 et 50 bars, étant suffisante pour traverser la membrane coquillière interne et diffuser le produit dans le liquide amniotique de l'oeuf, l'extrémité du tube 5 restant dans la chambre à air 18.

Le produit ainsi injecté est comme déjà dit par exemple une solution vaccinale ou une préparation thérapeutique.

Préalablement et/ou après cette injection, on peut envoyer dans la douille 11 un produit désinfectant par la canalisation 14 afin de désinfecter au moins la surface extérieure de la partie pénétrante du tube 5 et/ou la surface de l'oeuf avant poinçonnage afin d'éviter une contamination du produit à injecter et/ou de l'appareil et/ou d'un oeuf à l'autre.

Après cette opération, la remontée du piston 8 par le vérin 9 si celui-ci est à double effet, ou de manière automatique si ledit vérin est à simple effet, crée une dépression dans la chambre 2 qui se remplit ainsi par aspiration selon un volume prédéfini, via la canalisation 3 et le clapet 4, le clapet anti-retour 6 fermant dans ce sens le tube 5.

La remontée de l'ensemble au moyen du vérin 15 entraîne une extension de la douille 11 en dehors du corps 1 et on passe ainsi en sens inverse de la figure 2 à la figure 1, le dispositif étant prêt pour une nouvelle injection avec une nouvelle dose de produit.

Si on a décrit un dispositif d'injection, l'invention prévoit en fait de grouper aussi plusieurs dispositifs afin de traiter une pluralité d'oeufs simultanément.

En outre, à partir du dispositif décrit, on comprend toutes les étapes mentionnées ci-avant et revendiquées du procédé selon l'invention.

## Revendications

1. Procédé d'injection d'au moins un produit dans un oeuf (7) pour traiter l'embryon, ***caractérisé* en ce qu'**il consiste à percer la coquille et la membrane coquillière externe par le gros côté de l'oeuf (7) au moyen d'un petit tube (5) et d'injecter par ledit tube le produit dans la chambre à air (18) de l'oeuf (7), sous une pression suffisante pour que ledit produit atteigne le liquide amniotique après avoir traversé par pression la membrane coquillière interne.

2. Procédé selon la revendication 1, ***caractérisé* en ce que** la pression d'injection du produit est comprise entre 5 et 50 bars.

3. Dispositif d'injection d'au moins un produit dans un oeuf (7) pour traiter l'embryon, ***caractérisé* en ce qu'**il est pourvu d'un tube (5) de perçage et d'injection destiné à percer la coquille et la membrane coquillière externe et à canaliser au moins un produit dans la chambre à air sous une pression suffisante pour que ledit produit atteigne le liquide amniotique après avoir traversé par pression la membrane coquillière interne.

4. Dispositif selon la revendication 3, ***caractérisé* en ce que** le tube (5) de perçage et d'injection est alimenté par un piston (8) qui aspire le produit à injecter provenant d'une canalisation d'alimentation (3) pour remplir une chambre d'injection (2) et qui refoule ensuite ledit produit de ladite chambre dans le tube (5) de perçage et d'injection.

5. Dispositif selon la revendication 4, ***caractérisé* en ce qu'**entre la canalisation d'alimentation (3) du produit et la chambre d'injection (2) est disposé un clapet anti-retour (4) destiné à laisser passer le produit de ladite canalisation vers la chambre d'injection tandis que ladite chambre d'injection (2) est séparée du tube (5) de perçage et d'injection par un autre clapet anti-retour (6) qui laisse passer le produit de la chambre vers ledit tube.

6. Dispositif selon l'une des revendications 3 à 5, ***caractérisé* en ce que** le tube de perçage et d'injection (5) est protégé par une douille (11) qui entoure et protège complètement ledit tube (5) au repos tandis que ladite douille (11) est montée mobile en étant sollicitée dans cette position par un moyen élastique (12) de telle sorte qu'une force exercée sur l'extrémité de la douille entraîne un mouvement de celle-ci qui permet alors au tube (5) de faire saillie de ladite douille (11).

7. Dispositif selon la revendication 6, ***caractérisé* en ce que** l'extrémité de la douille (11) est pourvue d'une coupelle de centrage (13) destinée à venir recouvrir partiellement l'oeuf (7) sur lequel elle vient en contact.

8. Dispositif selon l'une des revendications 6 et 7, ***caractérisé* en ce qu'**il comporte une canalisation d'alimentation (14) qui communique avec la douille (11) afin de pouvoir injecter un désinfectant destiné à désinfecter au moins la surface externe de la partie pénétrante du tube (5) de perçage et d'injection et/ou la surface de l'oeuf (7) à percer.

9. Dispositif selon l'une des revendications 4 à 8, ***caractérisé* en ce qu'**il est pourvu d'un système de déplacement, notamment de montée-descente de l'ensemble, destiné à positionner le dispositif sur l'oeuf (7) à traiter et à le retirer.

10. Dispositif selon la revendication 9, ***caractérisé* en ce que** le système de déplacement est relié au dispositif par un accouplement articulé (17).

11. Dispositif selon l'une des revendications 9 et 10, ***caractérisé* en ce que** le système de déplacement comporte un vérin (15) dont l'extrémité de la tige (16) est reliée au dispositif.

## Patentansprüche

1. Verfahren zum Injektieren eines Eis (7) mit mindestens einem Mittel zur Behandlung des Embryos, **dadurch gekennzeichnet, dass** es besteht aus
- Durchbohren der Schale und der äußeren Schalenmembran an der dicken Seite des Eis (7) mittels eines kleinen Rohrs (5) und
- Injizieren des Mittels durch dieses Rohr in die Luftkammer (18) des Eis (7) mit einem Druck, der ausreicht, damit das Mittel nach dem Durchdringen der inneren Schalenmembran mit Druck das Fruchtwasser erreicht.

2. Verfahren nach Anspruch 1, **dadurch gekennzeichnet, dass** der Injektionsdruck des Mittels zwischen 5 und 50 bar liegt.

3. Vorrichtung zum Injektieren eines Eis (7) mit mindestens einem Mittel zur Behandlung des Embryos, **dadurch gekennzeichnet, dass** sie mit einem Bohr- und Injektionsrohr (5) versehen ist, das die Schale und die äußere Schalenmembran durchbohren soll und mindestens ein Mittel unter einem Druck in die Luftkammer leiten soll, der ausreicht, damit das Mittel nach dem Durchdringen der inneren Schalenmembran mit Druck das Fruchtwasser erreicht.

4. Vorrichtung nach Anspruch 3, **dadurch gekennzeichnet, dass** das Bohr- und Injektionsrohr (5) mit einem Kolben (8) versehen ist, der das zu injizierende Mittel, das aus einer Versorgungsleitung (3) kommt, zum Füllen einer Injektionskammer (2) ansaugt, und der dann das Mittel aus dieser Kammer in das Bohr- und Injektionsrohr (5) verdrängt.

5. Vorrichtung nach Anspruch 4, **dadurch gekennzeichnet, dass** zwischen der Versorgungsleitung (3) für das Mittel und der Injektionskammer (2) ein Rückschlagventil (4) angebracht ist, welches das Mittel aus der Versorgungsleitung zur Injektionskammer passieren lässt, während die Injektionskammer (2) vom Bohr- und Injektionsrohr (5) durch ein anderes Rückschlagventil (6) getrennt ist, welches das Mittel aus der Kammer in das Rohr passieren lässt.

6. Vorrichtung nach einem der Ansprüche 3 bis 5, **dadurch gekennzeichnet, dass** das Bohr- und Injektionsrohr (5) durch eine Hülse (11) geschützt ist, welche im Ruhezustand das Rohr (5) völlig umgibt und schützt, während die Hülse (11) beweglich montiert ist und in dieser Stellung durch ein elastisches Mittel (12) so belastet ist, dass eine auf das Ende der Hülse einwirkende Kraft eine Bewegung der Hülse bewirkt, so dass das Rohr (5) aus der Hülse (11) hervorsteht.

7. Vorrichtung nach Anspruch 6, **dadurch gekennzeichnet, dass** das Ende der Hülse (11) mit einer Zentrierschale (13) versehen ist, die das Ei (7), mit dem sie in Berührung kommt, teilweise bedecken soll.

8. Vorrichtung nach einem der Ansprüche 6 oder 7, **dadurch gekennzeichnet, dass** sie eine mit der Hülse (11) kommunizierende Versorgungsleitung (14) aufweist, um ein Desinfektionsmittel injizieren zu können, das zumindest die äußere Oberfläche des eindringenden Abschnitts des Bohr- und Injektionsrohrs (5) und/oder die Oberfläche des anzubohrenden Eis (7) desinfizieren soll.

9. Vorrichtung nach einem der Ansprüche 4 bis 8, **dadurch gekennzeichnet, dass** sie mit einem Verschiebesystem, insbesondere zur Auf- und Abbewegung des Aufbaus, versehen ist, welche die Vorrichtung auf dem zu behandelnden Ei (7) positionieren und sie zurückziehen soll.

10. Vorrichtung nach Anspruch 9, **dadurch gekennzeichnet, dass** das Verschiebesystem mit der Vorrichtung über eine Gelenkkupplung (17) verbunden ist.

11. Vorrichtung nach einem der Ansprüche 9 oder 10, **dadurch gekennzeichnet, dass** das Verschiebesystem mit einem Spindelheber (15) versehen ist, bei dem das Ende der Spindel (16) mit der Vorrichtung verbunden ist.

## Claims

1. Method for injecting at least one product into an egg (7) for treating the embryo, **characterised in that** it consists in piercing the shell and the external shell membrane through the fat end of the egg (7) by means of a small tube (5) and injecting the product through said tube into the air sac (18) of the egg (7) at a sufficient pressure for said product to reach the amniotic fluid after having passed through the internal shell membrane under pressure.

2. Method according to claim 1, **characterised in that** the pressure for injection of the product lies between 5 and 50 bar.

3. Device for injecting at least one product into an egg (7) for treating the embryo, **characterised in that** it is provided with a tube (5) for piercing and injection designed to pierce the shell and the external shell membrane and to convey at least one product into the air sac under a sufficient pressure for said product to reach the amniotic fluid after having passed through the internal shell membrane under pressure.

4. Device according to claim 3, **characterised in that** the tube (5) for piercing and injection is supplied by a piston (8) which sucks up the product to be injected from a supply pipe (3) to fill an injection chamber (2) and which then discharges said product from said chamber into the tube (5) for piercing and injection.

5. Device according to claim 4, **characterised in that** a non-return valve (4) is disposed between the supply pipe (3) for the product and the injection chamber (2) and is designed to allow the product to pass from said pipe to the injection chamber while said injection chamber (2) is separated from the tube (5) for piercing and injection by another non-return valve (6) which allows the product to pass from the chamber to said tube.

6. Device according to one of claims 3 to 5, **characterised in that** the tube (5) for piercing and injection is protected by a sleeve (11) which completely surrounds and protects said tube (5) at rest while said sleeve (11) is fitted so that it can move when forced into this position by an elastic means (12) such that a force exerted on the end of the sleeve produces a movement of the latter which then allows the tube (5) to project from said sleeve (11).

7. Device according to claim 6, **characterised in that** the end of the sleeve (11) is provided with a centering cup (13) designed to partially cover the egg (7) on which it comes into contact.

8. Device according to one of claims 6 and 7, **characterised in that** it comprises a supply pipe (14) which communicates with the sleeve (11) in order to be able to inject a disinfectant designed to disinfect at least the external surface of the penetrating portion of the tube (5) for piercing and injection and/or the surface of the egg (7) to be pierced.

9. Device according to one of claims 4 to 8, **characterised in that** it is provided with a system for movement, in particular for raising and lowering the assembly, designed to position the device on the egg (7) to be treated and to withdraw it.

10. Device according to claim 9, **characterised in that** the movement system is connected to the device through an articulated coupling (17).

11. Device according to one of claims 9 and 10, **characterised in that** the movement system comprises a jack (15) the end of the rod (16) of which is connected to the device.
